(19) Europäisches Patentamt
European Patent Office
Office européen des brevets

(11) **EP 4 024 638 A1**

(12) **EUROPEAN PATENT APPLICATION**

(43) Date of publication:
06.07.2022 Bulletin 2022/27

(21) Application number: 20217980.0

(22) Date of filing: 31.12.2020

(51) International Patent Classification (IPC):
*H02B 13/045* (2006.01)   *H02G 5/06* (2006.01)
*H01H 33/56* (2006.01)   *B05D 1/00* (2006.01)

(52) Cooperative Patent Classification (CPC):
**H02G 5/063; B29C 70/00; H01H 33/56;**
**H02B 13/045; B05D 1/62**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Hitachi Energy Switzerland AG**
**5400 Baden (CH)**

(72) Inventors:
• **CLAESSENS, Max**
**5417 Untersiggenthal (CH)**

• **KOERBER, Franz-Josef**
**63674 Altenstadt (DE)**
• **MILANOVIC, Raiko**
**60599 Frankfurt (DE)**
• **SONG, William-Liang**
**Beijing, Beijing 100029 (CN)**

(74) Representative: **Vossius & Partner**
**Patentanwälte Rechtsanwälte mbB**
**Siebertstrasse 3**
**81675 München (DE)**

(54) **APPARATUS FOR THE GENERATION, THE DISTRIBUTION AND/OR THE USAGE OF ELECTRICAL ENERGY AND METHOD FOR COATING AT LEAST ONE PART OF THE SAME**

(57) The present application relates to an apparatus for the generation, the distribution and/or the usage of electrical energy and a method for coating at least one part of the same. In particular, the application relates to a method for coating at least one part of an apparatus for the generation, the distribution and/or the usage of electrical energy, the method comprising coating the at least one part of the apparatus with a polymer, wherein the coating is made by applying a precursor in an atmospheric pressure plasma to the at least one part of the apparatus; and modifying the precursor with the atmospheric pressure plasma.

S101 | Applying a precursor in atmospheric pressure plasma to the object to be coated

S102 | Modifying the precursor with the atmospheric pressure plasma

# Figure 1

EP 4 024 638 A1

**Description**

The present application relates to an apparatus for the generation, the distribution and/or the usage of electrical energy and a method for coating at least one part of the same.

Dielectric insulation media in liquid or gaseous state are conventionally applied for the insulation of an electrical component in a wide variety of apparatuses, such as for example switchgears, gas-insulated substations, gas-insulated lines (GIL), or transformers.

In medium or high voltage metal-encapsulated switchgears, for example, the electrical component is arranged in a gas-tight housing, the interior of which defines an insulating space, said insulation space comprising an insulation gas and separating and electrically insulating the housing from the electrical component. For interrupting the current in a high voltage switchgear, the insulating gas further functions as an arc extinction gas.

Gas-insulated high-voltage switchgear (GIS) is a compact encapsulated switchgear comprising high-voltage components such as circuit-breakers and disconnectors, which can be safely operated in confined spaces. GIS can be used where space is limited, for example, extensions, in city buildings, on roofs, on offshore platforms, industrial plants and hydro power plants. Due to its compact design GIS is ideal gear for power transmission, integration of renewable power generation units, e.g. distributed energy resources, to the grid or application in railway systems. In such switchgear the insulating gas, typically sulphur hexaflouride (SF6), is under high pressure up to 8 bar (absolute) and is normally sealed within the equipment and high demands are made with regard to the gas-tightness of the connections within the switchgear. Typically, the sealing of these components is ensured using aluminum flanges with single or double O-rings which are greased for better outdoor corrosion protection.

However, a significant part of occurring defects in switchgear used for power transmission and distribution is caused by SF6 leakages, e.g. due to damaged sealing flanges (e.g. scratches), trapped dirt/particles/hairs at the O-ring(s) or corrosion processes. This does not only apply to gas-insulated switchgear but to all different kind of devices for the generation, the distribution and/or the usage of electrical energy, like (but not limited to) switchgear, medium/high voltage switchgear, gas insulated switchgear, live tank breakers, dead tank breakers, multifunctional modules and generator circuit breakers. Thus, there is a need for reducing the occurring leakages in gas-insulated devices for the generation, the distribution and/or the usage of electrical energy.

The aforementioned object, among others, is achieved by the independent claims. Dependent claims refer to preferred embodiments.

The present application relates to a method for coating at least one part of an apparatus for the generation, the distribution and/or the usage of electrical energy. The method comprises coating the at least one part of the apparatus with a polymer. The coating is made by applying a precursor in an atmospheric pressure plasma to the at least one part of the apparatus by and modifying the precursor with the atmospheric pressure plasma.

The present application also relates to an apparatus for the generation, the distribution and/or the usage of electrical energy.

Various embodiments may preferably implement the following features:
Preferably, the apparatus comprises at least one part which is coated with a polymer, wherein the coating has been made by applying a precursor in an atmospheric pressure plasma to the at least one part of the apparatus and modifying the precursor with the atmospheric pressure plasma.

Preferably, the apparatus is or comprises switchgear, in particular gas-insulated switchgear, live tank breakers, dead tank breakers, multifunctional modules, a busbar, a bushing, a cable, a gas-insulated cable, a cable joint, a gas-insulated line (GIL), a transformer, a current transformer, a voltage transformer, a surge arrester, an earthing switch, a disconnector, a combined disconnector and earthing switch, a load-break switch, a circuit breaker, any type of gas-insulated switch, a high voltage apparatus, a medium voltage apparatus, a low voltage apparatus, a direct-current apparatus, an air-insulated insulator, a gas-insulated metal-encapsulated insulator, sensors, a capacitor, an inductance, a resistor, a current limiter, a high voltage switch, a gas circuit breaker, a vacuum circuit breaker, a generator circuit breaker, a medium voltage switch, a ring main unit, a recloser, , a low voltage switch, a distribution transformer, a power transformer, a tap changer, a transformer bushing, a power semiconductor device, a power converter, a converter station, and/or generator circuit breakers. However, it is understood by the skilled person that the apparatus is not limited to these preferred embodiments and the present application is also applicable to other apparatuses in the field of generation, distribution and/or usage of electrical energy. Preferably, the apparatus is or comprises a high voltage apparatus, or is a high voltage component, respectively.

Preferably, the apparatus is gas-insulated, more preferably Sulfur-hexafluoride-, SF6-insulated.

Preferably, the method comprises cleaning and/or activating the at least one part and/or a surface thereof with the atmospheric pressure plasma before applying the precursor.

Preferably, the polymer is hydrophobic and viscoelastic.

The surface characteristics, e.g. hydrophobicity may preferably be measured via contact angle measurement using a contact angle measuring device.

Therefore, the samples may be placed into acetone then have ultrasonic treatment for approximately 15 minutes. After that, the samples may be taken out at room temperature for at least 1 hour. One or more drops of purified water may be dropped on the sample surface. The contact angle may be analyzed via a computer.

The surface of the sample is hydrophobic when the contact angle of the drop of purified water on the sample surface is greater than 90°.

Preferably the polymer is Polydimethylsiloxane (PDMS).

Preferably, the precursor is Hexamethyldisiloxane (HMDSO).

Preferably, the precursor is one of tetraethoxysilane (TEOS), hexamethyl-disilazane (HMDS), acetylene, maleic acid, oleic acid, linoleic acid and linolenic acid, acrylic acid, methacrylic acid, methacrylic acid methyl ester, pyrrole, pyridine, N-trimethyl chitosan, benzoquinone, polyvinylpyrrolidone, toluene, cyclohexane, decafluoropentane, and thiophene.

Preferably, the plasma is generated in a process gas by a discharge in the process gas. Preferably, the plasma is generated in a plasma nozzle. Preferably, the process gas is nitrogen, oxygen, hydrogen, noble gasses, ammonia, hydrogen sulphide and mixtures thereof, in particular a mixture of oxygen and nitrogen or pure oxygen.

Preferably, the modifying is polymerizing of the precursor.

Preferably, the thickness of the coating is within the range of 150 to 500 nm. Preferably, the thickness of the coating is within the range of 200 to 400 nm. Preferably, the thickness of the coating is one of: 200 nm, 300 nm or 400 nm.

Preferably, the at least one part of the apparatus is a sealing surface. Preferably, the at least one part of the apparatus is a flange, more preferably a contact face of the flange.

Preferably, the at least one part of the apparatus is configured to receive a sealing member.

Preferably, the sealing surface is a flange and the flange when being connected to a second flange, preferably through a sealing member, is gas-tight, more preferably Sulfur-hexafluoride-, SF6-,tight.

Various exemplary embodiments of the present disclosure are described in detail below with reference to the following Figures. The drawings are provided for purposes of illustration only and merely depict exemplary embodiments of the present disclosure to facilitate the reader's understanding of the present disclosure.

Therefore, the drawings should not be considered limiting of the breadth, scope, or applicability of the present disclosure.

It should be noted that for clarity and ease of illustration these drawings are not necessarily drawn to scale.

FIG. 1 shows a flow diagram according to an embodiment of the present disclosure.

FIG. 2 shows a comparation between a flange connection of bare Aluminum surface to a flange connection with two coated flanges.

FIG. 3 shows a flow diagram according to another embodiment of the present disclosure.

FIG. 4 shows the SF6 leakage rate of a circuit breaker with uncoated flanges and of circuit breakers having coated flanges with coatings from 200 to 400 nm.

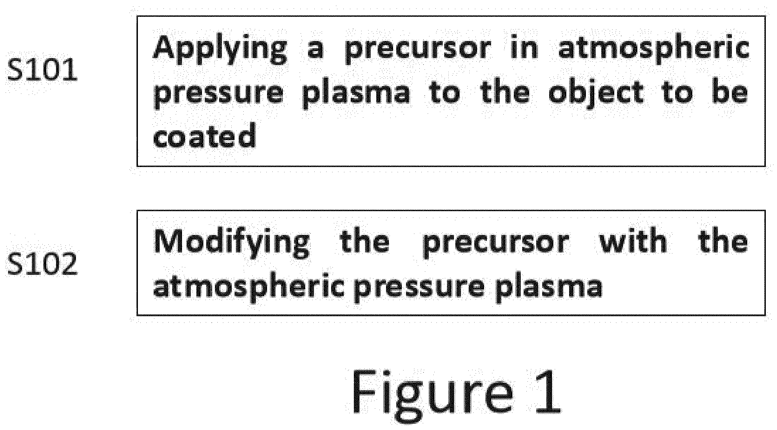

Figure 1 shows a flowchart according to an embodiment of the present disclosure. According to this embodiment, a part of or the whole apparatus for the generation, the distribution and/or the usage of electrical energy, e.g. a flange of a gas-insulated switchgear (GIS) is coated with a polymer.

In a first step S101, a precursor and a process gas are injected into a nozzle and a plasma is generated in the process gas by a discharge between electrodes. An example of the precursor is Hexamethyldisiloxane (HMDSO) and an example of the process gas is a mixture of nitrogen and oxygen. The particles of the precursor in the plasma and some of the plasma are then sprayed onto the surface to be coated, e.g. the surface of the flange.

In a second step S102, the precursor which is sprayed/applied to the flange, i.e. the HMDSO monomer, polymerizes thus forming long chains which are cross-linked thus forming a film of Polydimethylsiloxane (PDMS). The film of PDMS has a thickness of about 400 nm according to this embodiment but is not limited to.

The coated polymer PDMS is very robust against most of the chemicals occurring in the field of the present applications, e.g. detergents for cleaning the apparatus for the generation, the distribution and/or the usage of electrical energy. PDMS is known to be hydrophobic and viscoelastic.

Moreover, PDMS is known for having self-healing properties. Minor scratches on the surface to be coated are recovered within a certain time, e.g. about 12h.

PDMS has a high electrical resistance and is thus supposed to be electrically insulating. However, when PDMS is applied to a flange of a GIS and said flange is connected to another flange having PDMS or not, the connection shows a surprisingly low electric resistance and no bypass wires are needed to ensure electrical connection across flanges.

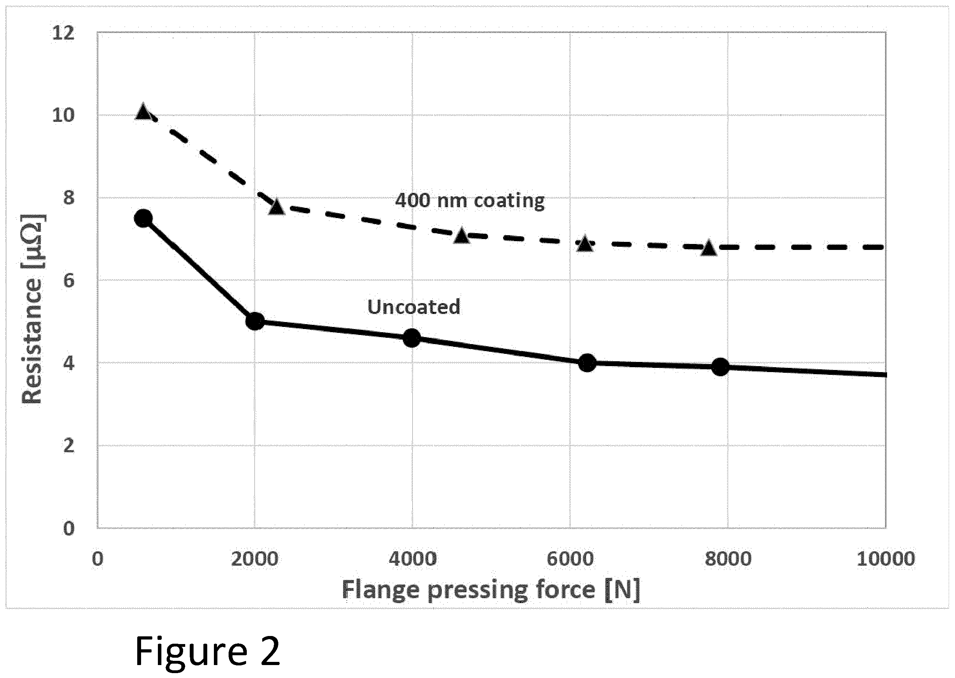

Fig. 2 shows a comparison between a flange connection of bare Aluminum surface to a flange connection with two coated flanges.

It can be seen from Figure 2 that the flange connection with two coated flanges having a coating of XXX with a thickness of 400 nm has still a surprisingly low electric resistance.

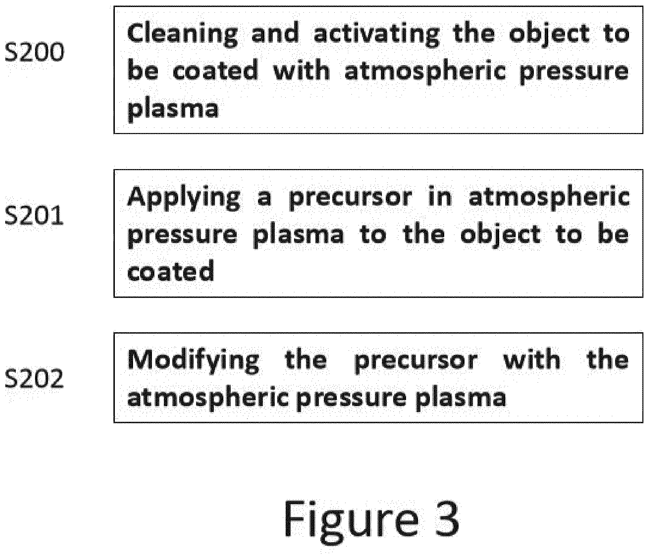

FIG. 3 shows a flow diagram according to another embodiment of the present disclosure. According to this embodiment, a part of or the whole apparatus for the generation, the distribution and/or the usage of electrical energy, e.g. a flange of a gas-insulated switchgear (GIS) is coated with a polymer.

In a first step S100, the (surface of the) flange is cleaned and activated with the atmospheric pressure plasma. Therefore, the process gas is injected into the nozzle and the plasma is generated in the process gas by a discharge between electrodes. The plasma is the directed onto the flange and the surface is activated and cleaned. This step is performed in case the object to be coated has to be activated and/cleaned and it is understood by the skilled person that this step might be omitted in case the surface is already sufficiently clean and/or no activation is needed.

The second step S201 according to this embodiment is identical to the first step S101 according to the embodiment shown in Figure 1. The precursor and the process gas are injected into the nozzle and the plasma is generated in the process gas by a discharge between electrodes. The particles of the precursor in the plasma and some of the plasma are then sprayed onto the object to be coated.

The third step S202 according to this embodiment is identical to the second step S102 according to the embodiment shown in Figure 1. The precursor which is sprayed/applied to the flange polymerizes thus forming long chains which are cross-linked leading to a film of PDMS.

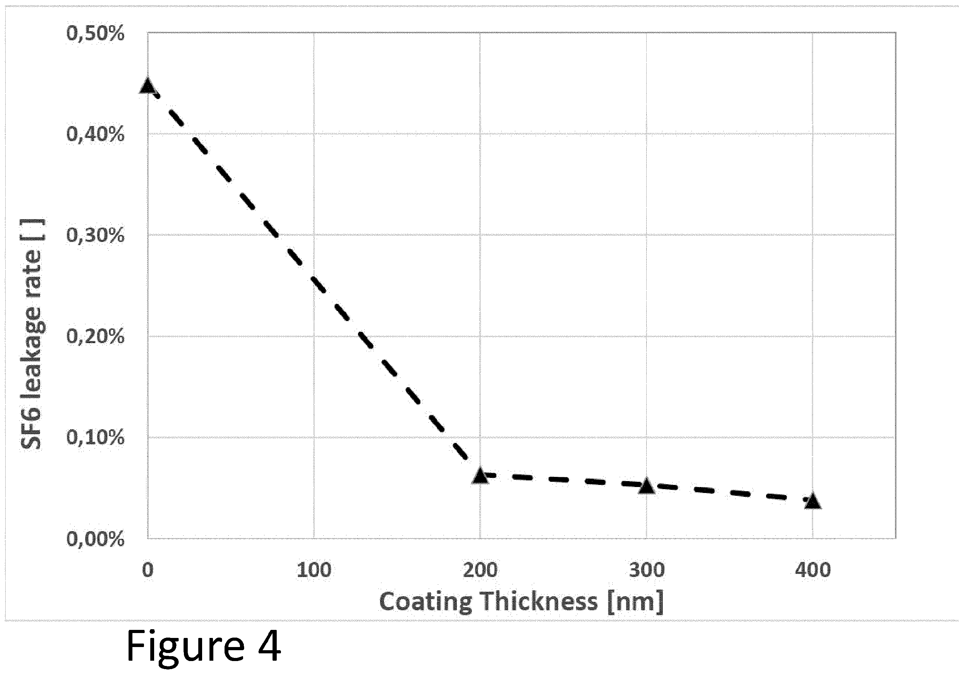

Figure 4 shows the SF6 leakage rate of a circuit breaker with uncoated flanges and of circuit breakers having coated flanges with coatings from 200 to 400 nm.
For the calculation of the leakage rate $F$ in percent per year, the following parameter are taken into consideration:

$V_{to}$     is the circuit-breaker gas volume, in $m^3$;
$P_{to}$     is the rated filling pressure at $T$ = 20 °C, in Pa absolute;
$T_{test}$     is the ambient temperature during leakage measurement, in °C;
$\gamma$     is the percentage of tracer gas in the circuit-breaker gas volume.
$P_{atm}$     is the atmospheric pressure during measurement (a default value of 101,3 kPa can be used);
$\Delta C$     is the tracer gas concentration increase ($C_1-C_0$), in p.p.m.$_v$. during the measuring time period;
$V_m$     is the enclosure gas volume, in $m^3$;
$T_{test}$     is the ambient temperature during leakage measurement, in °C;
$\gamma$     is the percentage of tracer gas in the circuit-breaker gas volume;
$t$     is the measuring time period.

SF6 has been used in all examples as a tracer gas.

With these parameters, the leakage rate $F$ can be calculated as follows:

$$F(\%) = \frac{P_{atm} \times 365\,\text{days} \times 24\,\text{hours} \times \Delta C \times V_m}{V_{to} \times P_{to} \times \left( \left(273\,\text{K} + T_{test}\right) \Big/ \left(273\,\text{K} + 20\,°\text{C}\right)\right) \times \gamma \times t}$$

Table 1 shows a comparison between circuit breakers with coated flanges according to the present disclosure and a circuit breaker with uncoated flanges. The reference object is a reference circuit breaker with uncoated flanges and the test objects with 200 nm, 300 nm and 400 nm coating are circuit breakers having coated flanges with coatings from 200 to 400 nm, respectively. The obtained leakage rates of the circuit breaker with uncoated flanges and of the circuit breakers having coated flanges with coatings from 200 to 400 nm are plotted in Figure 4.

Table 1

|  | unit | Reference Object | Test object with 200 nm coating | Test object with 300 nm coating | Test object with 400 nm coating |
|---|---|---|---|---|---|
| $V_{t0}$ | $m^3$ | 0,00013 | 0,00013 | 0,00013 | 0,00013 |
| $P_{t0}$ | MPa abs | 0,707 | 0,707 | 0,707 | 0,709 |
| $T_{test}$ | °C | 27 | 29 | 30 | 27 |
| $\gamma$ | % | 95,3 | 95,3 | 95,3 | 95,3 |

(continued)

|  | unit | Reference Object | Test object with 200 nm coating | Test object with 300 nm coating | Test object with 400 nm coating |
|---|---|---|---|---|---|
| $P_{atm}$ | MPa abs | 0,1013 | 0,1006 | 0,1011 | 0,1009 |
| $C_0$ | p.p.mv | 0,006 | 0,01 | 0,051 | 0,028 |
| $C_1$ | p.p.mv | 1,902 | 0,163 | 0,224 | 0,159 |
| $V_m$ | $m^3$ | 0,028 | 0,028 | 0,028 | 0,028 |
| t | h | 116,93 | 66,70 | 89,35 | 94,78 |
| **F** | **%/year** | **0,449** | **0,063** | **0,053** | **0,038** |

The reference object with bare aluminum flanges shows a leakage rate of 0.449 % per year whereas the leakage rate for the different coatings varies from 0,038 % per year for 400 nm coatings to 0.063 % per year for 200 nm coatings. As can be seen from this comparison, even with a relatively thin coating of only 200 nm, a significant reduction of the leakage rate F can be achieved.

While the application has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present application covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

**Claims**

1. A method for coating at least one part of an apparatus for the generation, the distribution and/or the usage of electrical energy, the method comprising:
   coating the at least one part of the apparatus with a polymer, wherein the coating is made by:

   applying a precursor in an atmospheric pressure plasma to the at least one part of the apparatus; and
   modifying the precursor with the atmospheric pressure plasma.

2. The method according to claim 1, wherein the polymer is hydrophobic and viscoelastic, preferably wherein the polymer is Polydimethylsiloxane, PDMS.

3. The method according to claim 2, wherein the precursor is Hexamethyldisiloxane, HMDSO.

4. The method according to any one of claims 1 to 3, wherein the modifying is polymerizing of the precursor.

5. The method according to any one of claims 1 to 4, wherein the thickness of the coating is within the range of 150 to 500 nm, preferably within the range of 200 to 400 nm, more preferably the thickness of the coating is one of: 200 nm, 300 nm or 400 nm.

6. The method according to any one of claims 1 to 5, wherein the at least one part of the apparatus is a sealing surface, preferably a flange, more preferably configured to receive a sealing member.

7. The method according to claim 6, wherein the sealing surface is a flange and wherein the flange when being connected to a second flange, preferably through a sealing member, is gas-tight, more preferably Sulfur-hexafluoride-, $SF_6$-, tight.

8. The method according to any one of claims 1 to 6, further comprising cleaning and/or activating the at least one part with the atmospheric pressure plasma before applying the precursor.

9. An apparatus for the generation, the distribution and/or the usage of electrical energy comprising at least one part which is coated with a polymer, wherein the coating is obtainable by applying a precursor in an atmospheric pressure plasma to the at least one part of the apparatus and modifying the precursor with the atmospheric pressure plasma.

10. The apparatus according to claim 9, wherein the polymer is hydrophobic and viscoelastic, preferably wherein the polymer is Polydimethylsiloxane, PDMS.

11. The apparatus according to claim 9 or 10, wherein the precursor is Hexamethyldisiloxane, HMDSO.

12. The apparatus according to any one of claims 9 to 11, wherein the modifying is polymerizing of the precursor.

13. The apparatus according to any one of claims 9 to 12, wherein the thickness of the coating is within the range of 150 to 500 nm, preferably within the range of 200 to 400 nm, more preferably the thickness of the coating is one of: 200 nm, 300 nm or 400 nm.

14. The apparatus according to any one of claims 9 to 13, wherein the at least one part of the apparatus is a sealing surface, preferably a flange, more preferably configured to receive a sealing member.

15. The apparatus according to claim 14, wherein the sealing surface is a flange and wherein the flange when being connected to a second flange, preferably through a sealing member, is gas-tight, more preferably Sulfur-hexafluoride-, $SF_6$-,tight.

EP 4 024 638 A1

| S101 | Applying a precursor in atmospheric pressure plasma to the object to be coated |
|---|---|

| S102 | Modifying the precursor with the atmospheric pressure plasma |

# Figure 1

Figure 2

EP 4 024 638 A1

S200 | Cleaning and activating the object to be coated with atmospheric pressure plasma

S201 | Applying a precursor in atmospheric pressure plasma to the object to be coated

S202 | Modifying the precursor with the atmospheric pressure plasma

## Figure 3

Figure 4

Europäisches
Patentamt

European
Patent Office

Office européen
des brevets

## EUROPEAN SEARCH REPORT

Application Number

EP 20 21 7980

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DE 10 2010 018063 A1 (SIEMENS AG [DE]) 20 October 2011 (2011-10-20) * paragraph [0011]; claim 1; figure 3 * ----- | 1-15 | INV.<br>H02B13/045<br>H02G5/06<br>H01H33/56<br>B05D1/00 |
| Y | EP 3 416 178 A1 (ABB SCHWEIZ AG [CH]) 19 December 2018 (2018-12-19) * claims 4, 8, 10, 11; figure 2 * ----- | 1-15 | |
| Y | DE 10 2009 046947 A1 (FRAUNHOFER GES FORSCHUNG [DE]) 26 May 2011 (2011-05-26) * paragraphs [0002], [0010], [0024], [0025], [0026], [0030], [0036], [0037], [0038], [0080] * ----- | 1-15 | |

TECHNICAL FIELDS
SEARCHED     (IPC)

H02B
H02G
H01H
C23D
B05D

The present search report has been drawn up for all claims

| Place of search | Date of completion of the search | Examiner |
|---|---|---|
| The Hague | 11 June 2021 | Starck, Thierry |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

EP 4 024 638 A1

## ANNEX TO THE EUROPEAN SEARCH REPORT
## ON EUROPEAN PATENT APPLICATION NO.

EP 20 21 7980

11-06-2021

| Patent document cited in search report | Publication date | Patent family member(s) | Publication date |
|---|---|---|---|
| DE 102010018063 A1 | 20-10-2011 | DE 102010018063 A1<br>WO 2011131654 A2 | 20-10-2011<br>27-10-2011 |
| EP 3416178 A1 | 19-12-2018 | NONE | |
| DE 102009046947 A1 | 26-05-2011 | DE 102009046947 A1<br>WO 2011061339 A1 | 26-05-2011<br>26-05-2011 |

EPO FORM P0459

For more details about this annex : see Official Journal of the European Patent Office, No. 12/82